# EUROPÄISCHE PATENTSCHRIFT

(11) **EP 3 647 009 B1**
(45) Veröffentlichungstag und Bekanntmachung des Hinweises auf die Patenterteilung: **08.12.2021**
(21) Anmeldenummer: 19202094.9
(22) Anmeldetag: 08.10.2019
(51) Int. Cl.: B28B 1/52, B28B 5/02, B28B 7/46, E04C 2/04

(54) **GIPSFASERPLATTE SOWIE VERFAHREN UND VORRICHTUNG ZUR HERSTELLUNG EINER GIPSFASERPLATTE**
GYPSUM FIBRE BOARD AND METHOD AND DEVICE FOR MANUFACTURING SAME
PLAQUE DE PLÂTRE-FIBRE AINSI QUE PROCÉDÉ ET DISPOSITIF DE FABRICATION D'UNE PLAQUE DE PLÂTRE-FIBRE

(30) Priorität: 29.10.2018 DE 102018218512
(43) Veröffentlichungstag der Anmeldung: 06.05.2020
(73) Patentinhaber: James Hardie Europe GmbH, 40474 Düsseldorf (DE)
(72) Erfinder: Dietrich, Thomas, 38228 Salzgitter (DE); Gudermuth, Thomas, 38685 Langelsheim (DE); Blasig, André, 37539 Bad Grund (DE)
(74) Vertreter: Dr. Solf & Zapf Patent- und Rechtsanwalts PartG mbB

(56) Entgegenhaltungen:
- WO-A1-93/04830
- WO-A1-2016/101968
- DE-A1- 2 751 466
- DE-A1- 2 751 473

## Beschreibung

Die vorliegende Erfindung betrifft ein Verfahren und eine Vorrichtung zur Herstellung einer Gipsfaserplatte bzw. faserverstärkte Gipsplatte, insbesondere nach DIN EN 15283-2.

Gipsfaserplatten werden als Bau-, Feuerschutz-, Schallschutz- und Feuchtraumplatten zur Beplankung (tragend) und Verkleidung (nicht tragend) von Bauteilen, z.B. Wänden, Decken, Stützen oder Trägern, verwendet. Gipsfaserplatten dienen insbesondere auch als Fertigteil-/Trockenestrichelemente, Hohlbodenelemente und Doppelbodenelemente zur Bildung von Fußbodenaufbauten.

Bei der Herstellung von Gipsfaserplatten wird aus calciniertem Gips, Fasern und gegebenenfalls Beimischungen eine Trockenmischung gebildet. Die Trockenmischung wird nach Zugabe von Wasser, ohne weitere Bindemittel, zu Platten geformt und getrocknet. Durch das Wasser bindet der Gips ab und durchdringt und umhüllt die Fasern. Der Abbindevorgang hat somit entscheidenden Einfluss auf die Qualität der Gipsfaserplatten. Insbesondere hat sich herausgestellt, dass durch ein möglichst gleichmäßiges Abbinden eine höhere Plattenfestigkeit erreicht werden kann.

Die Schwierigkeit beim Herbeiführen eines gleichmäßigen Abbindevorgangs ist, dafür zu sorgen, dass mit dem hinzugegebenen Abbindewasser eine möglichst vollständige und gleichmäßige Durchfeuchtung des Trockengemisches erfolgt, möglichst ohne dabei einen Wasserüberschuss entstehen zu lassen. Es sind Verfahren bekannt, die darauf gerichtet sind, ein möglichst gleichmäßiges Abbinden zu erreichen.

Die WO 93/04830 A1 offenbart ein Verfahren und eine Vorrichtung zur Herstellung von Gipsfaserplatten gemäß dem Oberbegriff des Anspruchs 1 bzw. 13, sie offenbart insbesondere ein Herstellungsverfahren nach einem Halbtrockenverfahren. Dabei wird mindestens eine Schicht einer Mischung von Gips, Fasern und Wasser auf ein kontinuierlich bewegtes Band gestreut. Anschließend wird die gestreute Schicht in einer Vorpresse mit gegenüberliegenden Druckwalzen auf 110 bis 180 % der gewünschten Plattendicke vorverdichtet, anschließend mit einer oberen und unteren Sprühvorrichtung nochmals befeuchtet und schließlich in der Hauptpresse auf Plattendicke gepresst. Die zwischen Vorpresse und Hauptpresse angeordneten Sprühvorrichtungen sind jeweils mit einem Vakuumkasten mit Gebläse kombiniert.

Die EP 0 260 342 A1 betrifft ein Verfahren zur Herstellung von Formteilen aus Gips und lignocellulosehaltigen Fasern im Trockenverfahren. Bei diesem Verfahren wird Gipspulver als Halbhydrat mit den Fasern vermischt, dieses trockene Gemisch in die gewünschte Form geschüttet, in einer Presse vorverdichtet und anschließend in derselben Presse zu den Formteilen gepresst, wobei das Gipspulver mit Hilfe von Wasser vom Halbhydrat in Dihydrat umgewandelt wird und die gepressten Formteile durch Wärmeeinwirkung getrocknet werden. Das zum Umwandeln des Gipses benötigte Wasser wird nach dem Vorverdichten des Gips-Faser-Gemisches diesem zugegeben.

In der Praxis hat sich gezeigt, dass es mit den üblicherweise zur Anwendung gebrachten Vorverdichtungstechniken, z.B. mittels Druckwalzen, nicht sichergestellt werden kann, dass bei dem anschließenden Pressvorgang stets eine gleichmäßige und vollständige Durchfeuchtung des Gips-Faser-Gemisches (sog. Kuchen) erfolgt. Insbesondere bei der Herstellung von Gipsfaserplatten, die eine Dicke von ≥ 30 mm aufweisen sollen, z.B. für die Verwendung als Fußbodenelemente, kann das Wasser nur noch zum Teil in den Kuchen eindringen. Dies kann zu einem deutlich höheren Wasseranteil im oberen Bereich der Platte führen, was beim Pressvorgang im oberen Bereich zu Verquetschungen und/oder im unteren Bereich zu trockenen Stellen führen kann.

Hierbei handelt es sich um ein bekanntes Problem. Zur Herstellung von dickeren Gipsfaserplatten werden derzeit zwei dünnere Platten miteinander verbunden.

Aus der DE 27 51 466 A1 ist außerdem ein Verfahren zur Herstellung von Platten aus Faserwerkstoff und Gips bekannt, wobei das Pressgut auf ein kontinuierlich bewegtes Siebband aufgestreut, mit Benetzungswasser in feiner Verteilung benetzt und danach gepresst und entwässert wird. Das Benetzungswasser wird dabei längs eines Bewegungsbahnabschnittes des fertig aufgestreuten Pressgutes aufgesprüht und auf das Benetzungswasser wird längs dieses Bewegungsbahnabschnittes durch das Siebband und das Pressgut hindurch eine Saugwirkung ausgeübt. Durch die Saugwirkung soll die Entstehung von Benetzungswassernestern auf/im Pressgut verhindert werden.

Die DE 27 51 473 A1 offenbart eine Anlage zur kontinuierlichen Herstellung von Platten aus Faserwerkstoff und Gips mit einer Saugbenetzungseinrichtung und einer Steuervorrichtung, die auf wassernestfreie Benetzung einstellbar ist. Die Saugbenetzungseinrichtung weist mehrere, oberhalb eines Siebbandes angeordnete Vernebelungsdüsen zur Verteilung des Benetzungswassers auf dem Pressgut sowie mehrere, unterhalb des Siebbandes angeordnete Saugkästen auf.

Der vorliegenden Erfindung liegt die Aufgabe zu Grunde ein Verfahren zur Herstellung einer Gipsfaserplatte zu schaffen, mittels dem ein vollständiges und gleichmäßiges Durchfeuchten bzw. Abbinden des Gipsfasergemisches gewährleistet wird, und mittels dem insbesondere auch Platten mit einer Dicke > 25 mm herstellbar sind.

Weitere Aufgabe der Erfindung ist es, eine Vorrichtung zur Herstellung einer derartigen Gipsfaserplatte bereitzustellen, mittels der ein vollständiges und gleichmäßiges Durchfeuchten bzw. Abbinden des Gipsfasergemisches gewährleistet wird, und mittels der ebenfalls insbesondere auch Platten mit einer Dicke > 25 mm herstellbar sind.

Erfindungsgemäß werden diese Aufgaben durch ein Verfahren mit den Merkmalen von Anspruch 1 sowie durch eine Vorrichtung mit den Merkmalen von Anspruch 13 gelöst. Vorteilhafte Weiterbildungen der Erfindung werden in den jeweiligen Unteransprüchen und in der folgenden Beschreibung angegeben.

Das erfindungsgemäße Verfahren umfasst folgende Verfahrensschritte:
- Erzeugen einer vorzugsweise trockenen Mischung aus Gips und Fasern,
- Aufbringen der Mischung auf ein sich mit einer Vorschubgeschwindigkeit kontinuierlich in eine Vorschubrichtung bewegendes, gaspermeables und/oder luftpermeables und/oder flüssigkeitspermeables Fördermittel,
- Vorverdichten der Mischung,
- Durchfeuchten der Mischung mit Abbindewasser,
- Nachverdichten der Mischung,
- Pressen der Mischung zu einem Gipsfaserplattenstrang,
- Ablängen des Gipsfaserplattenstrangs in einzelne Gipsfaserplatten,
- Trocknen der Gipsfaserplatten,
- Gegebenenfalls Nachbearbeiten und/oder Beschichten der getrockneten Gipsfaserplatten.

Erfindungsgemäß ist das Verfahren dadurch gekennzeichnet, dass zum Vorverdichten die Mischung mit einem Wassernebel in Form eines Aerosols besprüht wird und, vorzugsweise gleichzeitig, mit einem Unterdruck beaufschlagt wird, wobei der Wassernebel derart in die Mischung hineingesaugt wird, dass die Mischung über ihren gesamten Querschnitt gleichmäßig befeuchtet wird.

Vorteilhaft bei dem erfindungsgemäßen Verfahren ist, dass der Wassernebel beim Vorverdichten derart in die Gipsfasermischung hineingesaugt wird, dass die Mischung über ihren gesamten Querschnitt gleichmäßig befeuchtet werden kann. Dadurch werden Gips und Fasern wasseraufnahmefähiger gemacht, so dass die Mischung mit der später zugegebenen Menge an Abbindewasser gleichmäßig und vollständig durchfeuchtet wird.

Die auf diese Weise hergestellten Gipsfaserplatten zeichnen sich je nach Einstellung des Gesamtsystems durch eine hohe Festigkeit, insbesondere Biegefestigkeit nach DIN EN 15283-2, und hohe Rohdichte aus.

Des Weiteren ist bei dem erfindungsgemäßen Verfahren die Vorverdichtung an die herzustellende Plattendicke anpassbar, indem Wassernebel bzw. Unterdruck entsprechend abgestimmt werden. Das erfindungsgemäße Verfahren ermöglicht somit die Herstellung unterschiedlicher Plattendicken und eine Steigerung der Vorschubgeschwindigkeit in Abhängigkeit von der Plattendicke. Hierdurch wird der Durchsatz und der Produktionsablauf bei der Herstellung von Gipsfaserplatten verbessert.

Insbesondere sind mit dem erfindungsgemäßen Verfahren auch zuverlässig und reproduzierbar Gipsfaserplatten hoher Festigkeit mit einer Plattendicke > 25 mm herstellbar. Das Verfahren ermöglicht somit die Herstellung von Fußbodenelementen, die aus einer einzelnen dicken Gipsfaserplatte aufgebaut sind, anstatt aus zwei miteinander verbundenen dünnen Platten.

Als Gips ist im Rahmen der Erfindung ein aus Gipsgestein gewonnener Gips, so genannter Naturgips, insbesondere Baugips oder Stuckgips, sowie industriell hergestelltes oder bei technischen Prozessen als Nebenprodukt anfallendes Calciumsulfat, so genannter technischer Gips, insbesondere aus Rauchgas-Entschwefelungsanlagen stammender Gips (REA-Gips), verwendbar. Auch sind Calciumsulfat-Modifikationen aus dem Rückbau und Recycling (Recycling-Gips) verwendbar.

Als Fasern sind im Rahmen der Erfindung alle zur Herstellung von Gipsfaserplatten geeigneten Fasern, insbesondere zellulosehaltige Fasern, z.B. recycelte Papierfasern, oder künstliche Mineralfasern, z.B. Glasfasern, verwendbar.

Außerdem liegt es im Rahmen der Erfindung, dass der Mischung ein Zuschlagstoff, vorzugsweise Blähperlit und/oder Glimmer, und/oder ein Zusatzstoff, vorzugsweise Farbstoff, zugegeben werden kann, und/oder dass der Mischung und/oder dem Abbindewasser ein Zusatzmittel, vorzugsweise Abbindebeschleuniger oder Abbindeverzögerer und/oder Hydrophobiermittel, zugegeben werden kann.

Gemäß einer vorteilhaften Ausführung des Verfahrens wird zum Vorverdichten eine erste Oberfläche der Mischung, vorzugsweise deren fördermittelabgewandte freie Oberseite, mit dem Wassernebel besprüht, und an einer dieser gegenüberliegenden zweiten Oberfläche der Mischung, vorzugsweise an deren fördermittelzugewandter Unterseite, der Unterdruck angelegt. Dies erfolgt vorzugsweise gleichzeitig.

Vorzugsweise wird zum Vorverdichten mit dem Wassernebel in der Mischung ein Wasser/Feststoffwert w/f von 0,05 bis 0,25, vorzugsweise von 0,1, hergestellt.

Bei dem Wassernebel handelt es sich um ein Aerosol, insbesondere aus flüssigen Aerosolpartikeln in Umgebungsluft mit einer durchschnittlichen Partikelgröße von 0,1 bis 60 µm, vorzugsweise 15 µm.

Vorzugsweise wird zum Vorverdichten ein Unterdruck von 5 bis 20 mbar, vorzugsweise von 10 bis 15 mbar, bevorzugt von 10 mbar, an die Mischung angelegt.

Gemäß einer weiteren vorteilhaften Ausführung wird zum Nachverdichten die Mischung ebenfalls mit einem Unterdruck beaufschlagt. Insbesondere wird dabei ein Unterdruck von 10 bis 25 mbar, vorzugsweise von 15 bis 20 mbar, bevorzugt von 20 mbar, erzeugt. Besonders bevorzugt wird der Unterdruck in Vorschubrichtung des Fördermittels langsam steigend angelegt, z.B. indem die zur Erzeugung des Unterdrucks abgesaugte Luftmenge in Vorschubrichtung sektionsweise gesteigert wird.

Vorzugsweise wird zum Vorverdichten und/oder zum Nachverdichten der Unterdruck jeweils an eine Unterseite des Fördermittels bzw. fördermittelunterseitig angelegt, so dass der Unterdruck durch das Fördermittel hindurch auf die Mischung wirkt. Vorzugsweise werden mit dem erfindungsgemäßen Verfahren Gipsfaserplatten mit einer Dicke von 6 bis 50 mm hergestellt. Insbesondere werden Gipsfaserplatten im üblichen Dickenbereich mit einer Dicke von 10 bis 25 mm, besonders bevorzugt von 10 bis 18 mm, oder dicke Gipsfaserplatten mit einer Dicke von 25 bis 40 mm, besonders bevorzugt von 30 mm, hergestellt.

Dabei weist eine vorteilhafte, mit dem erfindungsgemäßen Verfahren herstellbare bzw. hergestellte Gipsfaserplatte vorzugsweise folgende Werkstoffeigenschaften auf:
Rohdichte (nach DIN EN 15283-2) von 1000 bis 1500 kg/m³, vorzugsweise von 1200 kg/m³,
Biegefestigkeit (nach DIN EN 15283-2) von 4 bis 15 N/mm², vorzugsweise von 7 N/mm².

Die erfindungsgemäße Vorrichtung zur Herstellung einer Gipsfaserplatte umfasst:
- eine Fördereinrichtung mit einem in eine Vorschubrichtung mit einer Vorschubgeschwindigkeit antreibbaren Fördermittel, insbesondere Transportband, zum Fördern von Rohstoffen, wobei das Fördermittel derart ausgebildet ist, dass es von Gasen und/oder Luft und/oder Wasser durchströmbar ist,
- eine Rohstoffapplikationseinrichtung mit einer Zuführeinrichtung zum Aufbringen einer im Wesentlichen aus Gips und Fasern bestehenden Mischung, insbesondere Trockenmischung, auf das Fördermittel,
- eine der Zuführeinrichtung in Vorschubrichtung nachgeordnete Vorverdichtungseinrichtung,
- der Vorverdichtungseinrichtung in Vorschubrichtung nachgeordnet eine Befeuchtungseinrichtung und eine Nachverdichtungseinrichtung,
- eine der Nachverdichtungseinrichtung in Vorschubrichtung nachgeordnete Presseinrichtung, sowie
- eine der Presseinrichtung in Vorschubrichtung nachgeordnete Schneideinrichtung.

Erfindungsgemäß ist die Vorrichtung dadurch gekennzeichnet, dass die Vorverdichtungseinrichtung Mittel zum Besprühen der Mischung mit einem Wassernebel in Form eines Aerosols sowie Mittel zum, vorzugsweise gleichzeitigen, Beaufschlagen der Mischung mit einem Unterdruck aufweist, wobei der Wassernebel derart in die Mischung hineinsaugbar ist, dass die Mischung über ihren gesamten Querschnitt gleichmäßig befeuchtbar ist.

Die Vorrichtung eignet sich insbesondere zur Durchführung des erfindungsgemäßen Verfahrens und weist ebenfalls die vorstehend beschriebenen Vorteile auf.

Insbesondere ist bei der erfindungsgemäßen Vorrichtung die Vorverdichtungseinrichtung an die herzustellende Plattendicke anpassbar, indem Wassernebel bzw. Unterdruck entsprechend abgestimmt sind. Durch die erfindungsgemäße Vorrichtung ist eine Steigerung der Vorschubgeschwindigkeit in Abhängigkeit der Plattendicke möglich. Die Vorrichtung gewährleistet somit einen höheren Durchsatz und verbesserten Produktionsablauf bei der Herstellung.

Insbesondere sind mit der erfindungsgemäßen Vorrichtung auch zuverlässig und reproduzierbar Gipsfaserplatten hoher Festigkeit mit einer Plattendicke > 25 mm herstellbar, z.B. Fußbodenelemente, die aus einer einzelnen dicken Gipsfaserplatte aufgebaut sind.

Gemäß einer bevorzugten Ausgestaltung ist die Vorrichtung derart ausgebildet, dass mit der Vorverdichtungseinrichtung eine erste Oberfläche der Mischung, vorzugsweise deren fördermittelabgewandte freie Oberseite, mit dem Wassernebel besprühbar ist, und an einer dieser gegenüberliegenden zweiten Oberfläche der Mischung, vorzugsweise an deren fördermittelzugewandter Unterseite, der Unterdruck anlegbar ist.

Vorzugsweise umfasst die Vorverdichtungseinrichtung Mittel zum Besprühen, mit denen die Mischung mit feinen Wassertropfen mit einer durchschnittlichen Tropfengröße von 0,1 bis 60 µm, vorzugsweise 15 µm, besprühbar ist, insbesondere dickenabhängig mit einer Wassermenge von 1 bis 10 l/h.

Vorzugsweise weisen die Mittel zum Besprühen zumindest eine Nebeldüse, bevorzugt 1 bis 35 Nebeldüsen, besonders bevorzugt 14 bis 28 Nebeldüsen, auf, womit der Wassernebel mit einem Luftdruck von 2 bis 4 bar, vorzugsweise 3 bar, und einem Flüssigkeitsdruck von 1 bis 3 bar, vorzugsweise 2 bar, und einem Strahlwinkel von 40 ° bis 80 °, vorzugsweise 60 °, versprühbar ist. Insbesondere handelt es sich bei den Nebeldüsen um Pneumatik-Zerstäuberdüsen.

Vorzugsweise umfasst die Vorverdichtungseinrichtung Mittel zum beaufschlagen der Mischung mit Unterdruck, wobei die Mittel ausgebildet sind, um an der Mischung einen Unterdruck von 5 bis 20 mbar, vorzugsweise von 10 bis 15 mbar, bevorzugt von 10 mbar, anzulegen. Vorzugsweise sind die Mittel derart ausgebildet, dass der Unterdruck an einer Unterseite des Fördermittels anlegbar ist, wobei die Mischung durch das Fördermittel hindurch mit dem Unterdruck beaufschlagbar ist.

Gemäß einer weiteren vorteilhaften Ausführung weist die Nachverdichtungseinrichtung ebenfalls Mittel zum Erzeugen eines Unterdrucks auf, wobei vorzugsweise die Mischung mit einem Unterdruck von 10 bis 25 mbar, vorzugsweise von 15 bis 20 mbar, bevorzugt von 20 mbar, beaufschlagbar ist.

Vorzugsweise ist die Nachverdichtungseinrichtung der Befeuchtungseinrichtung in Vorschubrichtung des Fördermittels nachgeordnet, wobei der von den Mitteln der Nachverdichtungseinrichtung erzeugbare Unterdruck an einer Unterseite des Fördermittels anlegbar ist, so dass die Mischung durch das Fördermittel hindurch mit dem Unterdruck beaufschlagbar ist. Besonders bevorzugt sind die Mittel zum Erzeugen eines Unterdrucks so ausgestaltet, dass die zur Erzeugung des Unterdrucks abgesaugte Luftmenge in Vorschubrichutng des Fördermittels sektionsweise steigerbar ist.

Im Folgenden wird die Erfindung anhand einer Zeichnung beispielhaft näher erläutert. Es zeigen:
Fig. 1 eine erfindungsgemäße Vorrichtung;
Fig. 2 eine bei dem erfindungsgemäßen Verfahren sowie der erfindungsgemäßen Vorrichtung verwendete Vorverdichtungseinrichtung.

In den einzelnen Figuren sind gleiche Teile stets mit denselben Bezugszeichen versehen.

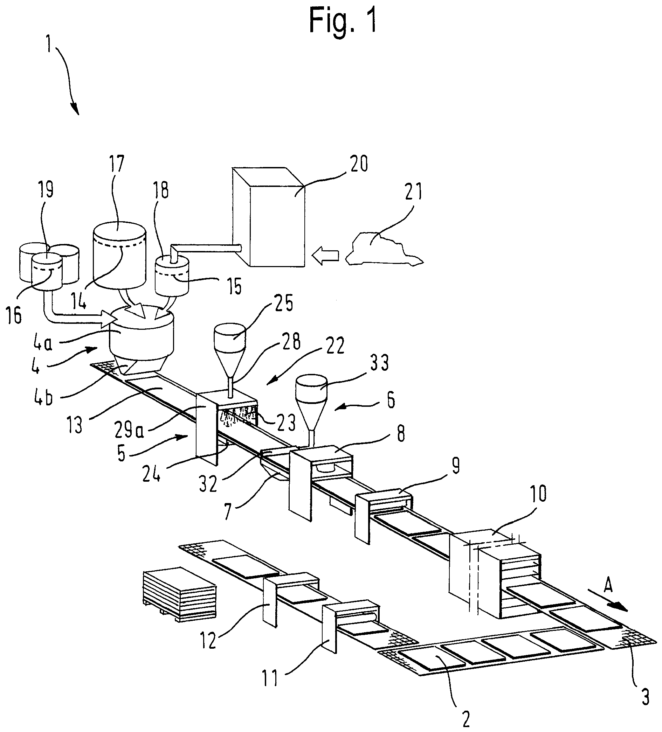

Eine erfindungsgemäße Vorrichtung 1 zur Herstellung einer Gipsfaserplatte 2 ist in Fig. 1 dargestellt. Die Vorrichtung 1 weist eine Fördereinrichtung 3 mit einem in eine Vorschubrichtung A antreibbaren Fördermittel 3a zum Fördern einer schüttfähigen Rohstoff-Mischung 13 auf. Die Vorrichtung 1 umfasst des Weiteren eine Rohstoffapplikationseinrichtung 4, eine Vorverdichtungseinrichtung 5, eine Befeuchtungseinrichtung 6, eine Nachverdichtungseinrichtung 7, eine Presseinrichtung 8, eine Schneideinrichtung 9, eine Trocknungseinrichtung 10, eine Bearbeitungseinrichtung 11 und eine Beschichtungseinrichtung 12, welche in Vorschubrichtung A des Fördermittels einander nachgeordnet sind und von diesem durchfahrbar sind.

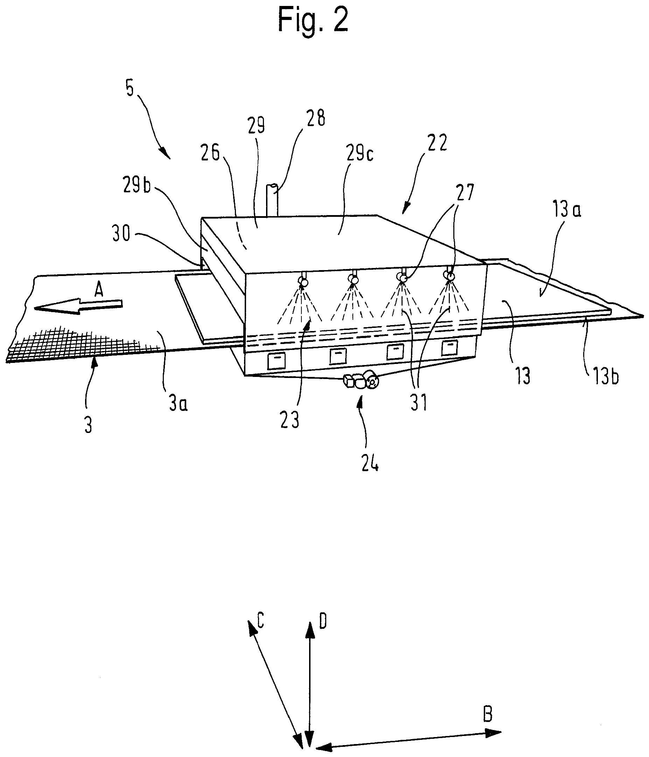

Die Fördereinrichtung 3 ist als angetriebenes Förderband ausgebildet und weist als Fördermittel insbesondere ein Siebband 3a (Fig. 2) auf. Des Weiteren weist die Fördereinrichtung 3 an sich bekannte Antriebsmittel, z.B. Elektromotoren, auf, mit denen das Siebband 3a mit einer Vorschubgeschwindigkeit V_{A} in Vorschubrichtung A antreibbar ist. In Abhängigkeit von der Dicke der Rohstoff-Mischung 13 ist z.B. eine Vorschubgeschwindigkeit V_{A} von 50 bis 500 mm/s einstellbar. Das Siebband 3a weist eine Auflagefläche auf, auf der die Mischung 13 aufbringbar ist. Das Siebband 3a ist gas- und wasserdurchlässig bzw. aus einem gas- und wasserpermeablen Material gebildet, insbesondere luftdurchlässig, so dass Gase, insbesondere die Umgebungsluft, in das Siebband 3a von einer Seite einströmen und auf der anderen Seite wieder ausströmen können. Hierauf wird nachstehend genauer eingegangen.

Die Rohstoffapplikationseinrichtung 4 weist eine Mischeinrichtung 4a und eine Zuführeinrichtung 4b auf. Bei der Rohstoffapplikationseinrichtung 4 handelt es sich zum Beispiel um eine Ausstreumaschine.

Die Mischeinrichtung 4a ist mit einem Vorratsbehälter 17 für Gips 14, einem Vorratsbehälter 18 für Papierfasern 15, und weiteren Vorratsbehältern 19 für Zuschlagstoffe, Zusatzstoffe und Zusatzmittel 16 verbunden. Die Mischeinrichtung 4a ist aus den Behältern 17, 18, 19 mit einer für die Herstellung der Mischung 13 bestimmten Menge an Gips 14, Fasern 15 und sonstigen Stoffen 16 befüllbar. Die Mischeinrichtung 4a dient somit zum Mischen und Herstellen der Mischung 13.

Dem Faserbehälter 15 der Mischeinrichtung 4a ist in vorteilhafter Weise eine Papieraufbereitungseinrichtung 20 zugeordnet, mittels der Altpapier 21, welches der Aufbereitungseinrichtung 20 zuführbar ist, zu den Papierfasern 15 recycelbar ist. Bei der Papieraufbereitungseinrichtung 20 handelt es sich um Hammer- und Fasermühlen.

Die Zuführeinrichtung 4b ist mit der Mischeinrichtung 4a verbunden. Die Zuführeinrichtung 4b ist derart ausgebildet, dass die von der Mischeinrichtung 4a herstellbare Mischung 13 mit einer vorbestimmbaren Mischungshöhe bzw. Mischungsdicke auf das Siebband 3a aufstreubar ist.

Die in Fig. 2 genauer dargestellte Vorverdichtungseinrichtung 5 weist Mittel zum Besprühen 22 der Mischung 13 mit einem Wassernebel 23 sowie Mittel 24 zum, vorzugsweise gleichzeitigen, Beaufschlagen der Mischung 13 mit einem Unterdruck auf.

Die Mittel zum Besprühen 22 umfassen einen Wasservorratsbehälter 25, eine Sprühkammer 26 mit zumindest einer Nebeldüse 27 zum Erzeugen des Wassernebels 23, sowie eine Wasserzuleitung 28 mittels der Wasser vom Wasservorratsbehälter 25 der Nebeldüse 27 zuführbar ist.

Die Sprühkammer 26 weist ein vorzugsweise quaderförmiges Gehäuse 29 auf, welches oberhalb des Siebbands 3a angeordnet ist. Das Gehäuse 29 ist vorzugsweise das Siebband 3a umgebend bzw. umschließend angeordnet, so dass ein Gehäuse- bzw. Sprühkammerinnenraum vom Siebband durchfahrbar ist. Das Gehäuse 29 weist insbesondere zwei sich in eine Längsrichtung B parallel zur Vorschubrichtung A erstreckende, gegenüberliegende Seitenwandungen 29a, sowie zwei hierzu senkrecht verlaufende, sich in eine Breitenrichtung C erstreckende Stirnwandungen 29b, sowie eine zu den Wandungen 29a, 29b senkrechte, sich in eine Höhenrichtung D erstreckende Deckenwandung 29c auf. Die Stirnwandungen 29b weisen jeweils eine Durchtrittsöffnung 30 auf, durch die das Siebband 3a mit der darauf aufliegenden Mischung 13 auf einer Gehäuseseite in das Gehäuse 29 bzw. in die Sprühkammer 26 hineinförderbar und auf der gegenüberliegenden Gehäuseseite wieder herausförderbar ist. Die Durchtrittsöffnung 30 weist in Breitenerstreckung des Siebbands 3a bzw. in Breitenrichtung C eine Breite und senkrecht hierzu in Höhenrichtung D eine Höhe auf. Die Breite ist derart bemessen, dass das Siebband 3a mit einem möglichst geringen Abstand, vorzugsweise von 1 bis 5 mm, zur jeweiligen Seitenwandung 29a durch die Durchtrittsöffnung 30 bewegbar ist. Die Höhe der Durchtrittsöffnung 30 entspricht dem Abstand einer Unterkante der Seitenwandung 29b vom Siebband 3a bzw. von der Mischung 13. Vorzugsweise ist die Höhe der Durchtrittsöffnung 30 an die Höhe der zum Aufstreuen auf das Siebband 3a bestimmten Mischung 13 anpassbar. Insbesondere ist die Seitenwandung 29b in Höhenrichtung D antreibbar auf und ab bewegbar, so dass die Höhe der Durchtrittsöffnung 30 vergrößerbar bzw. verringerbar ist.

Innerhalb des Gehäuses 29, vorzugsweise an der Deckenwandung 29c, sind die Nebeldüsen 27 angeordnet. Vorzugsweise sind 1 bis 35, bevorzugt 14 bis 28, Nebeldüsen 27 vorgesehen. Die Nebeldüsen 27 sind zweckmäßigerweise in einem regelmäßigen Abstand zueinander in der Sprühkammer 26 verteilt angeordnet und in Richtung des Siebbands 3a gerichtet, so dass eine erste, fördermittelabgewandte, freie Oberseite 13a der Mischung 13 gleichmäßig mit dem Wassernebel 23 besprühbar ist. Vorzugsweise sind die Nebeldüsen 27 jeweils zum Versprühen eines aus Gas, z.B. Stickstoff, oder Luft und aus Wasserteilchen bestehenden Aerosols mit kegelartig ausgebildeter Tropfenbahn bzw. eines Aerosolkegels 31 ausgebildet. Beispielsweise ist der Aerosolkegel 31 mit einem Luftdruck von 2 bis 4 bar, vorzugsweise 3 bar, und einem Flüssigkeitsdruck von 1 bis 3 bar, vorzugsweise 2 bar, und einem Strahlwinkel von 40 bis 80 °, vorzugsweise 60 °, erzeugbar, wobei die Wasserteilchen insbesondere eine durchschnittliche Tropfengröße von 0,1 bis 60 µm, vorzugsweise 15 µm aufweisen. Bei den Nebeldüsen 27 handelt es sich z.B. um Pneumatik-Zerstäuberdüsen, Typ Lechler 136.231.35 A2.

Der von den Mitteln 22 zum Besprühen auf die Mischung 13 sprühbare Wassernebel 23 ist somit vorzugsweise aus mehreren Aerosolkegeln 31 gebildet. Vorzugsweise ist die Mischung 13 kontinuierlich mit dem Wassernebel 23 besprühbar.

Die Mittel 24 zum Beaufschlagen der Mischung 13 mit einem Unterdruck weisen eine Unterdruckerzeugungseinrichtung (nicht dargestellt) auf, mittels der ein Unterdruck erzeugbar und an einer der freien Oberseite 13a gegenüberliegenden, fördermittelzugewandten Unterseite 13b anlegbar ist. Vorzugsweise sind die Mittel 24 ausgestaltet, um den Unterdruck an einer Unterseite des Siebbands 3a anzulegen, so dass die Mischung 13 durch das Siebband 3a hindurch mit dem Unterdruck beaufschlagbar ist. Vorzugsweise ist an der Mischung 13 ein Unterdruck von 5 bis 20 mbar, vorzugsweise von 10 bis 15 mbar, bevorzugt von 10 mbar, anlegbar. Durch Anlegen des Unterdrucks ist der Wassernebel 23 in die Mischung 13 hineinsaugbar. Vorzugsweise handelt es sich bei den Mitteln 24 um eine Vakuumwanne.

Die Befeuchtungseinrichtung 6 weist Mittel 32 zum Bewässern der Mischung 13 mit dem zum Abbinden der Gipsfasermischung notwendigen Abbindewasser sowie einen mit dem Bewässerungsmittel 32 verbundenen Wasservorratsbehälter 33 zum Zuführen des Abbindewassers auf. Das Bewässerungsmittel 32 ist vorzugsweise als Wasservorhang ausgebildet.

Die Nachverdichtungseinrichtung 7 weist vorzugsweise Mittel zum Erzeugen eines Unterdrucks auf, mittels dem das Abbindewasser die Mischung 13 nachverdichtend in die Mischung hineinsaugbar ist. Vorzugsweise sind die Mittel zum Erzeugen eines Unterdrucks analog zu den Mitteln 24 der Vorverdichtungseinrichtung 5 ausgestaltet und weisen eine Unterdruckerzeugungseinrichtung zum Anlegen eines Unterdrucks an der Unterseite 13b der Mischung 13 auf. Vorzugsweise ist der Unterdruck ebenfalls an einer Unterseite des Siebbands 3a anlegbar, so dass die Mischung 13 durch das Siebband 3a hindurch mit dem Unterdruck beaufschlagbar ist. Vorzugsweise ist mit der Nachverdichtungseinrichtung 7 an der Mischung 13 ein Unterdruck von 10 bis 25 mbar, vorzugsweise von 15 bis 20 mbar, bevorzugt von 20 mbar, anlegbar. Insbesondere ist der Unterdruck so anlegbar, dass die zur Erzeugung des Unterdrucks abgesaugte Luftmenge sektionsweise entlang der Förderbandunterseite in Vorschubrichtung A gesehen steigerbar ist. Vorzugsweise umfasst die Nachverdichtungseinrichtung eine Vakuumwanne.

Die Presseinrichtung 8 weist Mittel zum Pressen bzw. Verdichten der Mischung 13 zu einem, insbesondere kontinuierlichen, Gipsfaserplattenstrang mit einer Dicke entsprechend der herzustellenden Gipsfaserplatte 2 auf. Bei der Presseinrichtung 8 handelt es sich vorzugsweise um eine Takt- oder ContiRoll-Presse.

Die Schneideinrichtung 9 weist Mittel zum Zerteilen, z.B. Schneidmesser oder Wasserstrahlschneider, des Gipsfaserplattenstrangs entlang der Breitenrichtung C in einzelne Gipsfaserplatten 2 auf. Die Schneideinrichtung 9 dient somit zum Vereinzeln des Gipsfaserplattenstrangs in die Gipsfaserplatten 2.

Die Trocknungseinrichtung 10 weist Mittel zum Trocknen der Gipsfaserplatten 2 auf. Es handelt sich vorzugsweise um einen Mehretagentrockner.

Die Bearbeitungseinrichtung 11 weist Mittel zum Bearbeiten der Gipsfaserplatten 2, wie z.B. eine Schleifeinrichtung, eine Kantenprofilierungseinrichtung oder dergleichen, auf.

Die Beschichtungseinrichtung 12 weist Mittel zum Beschichten der Gipsfaserplatte 2 mit einem Beschichtungsmittel, z.B. Hydrobhobiermittel und/oder Mittel zur Staubbindung, auf.

Nachfolgend wird die erfindungsgemäße, insbesondere kontinuierliche, Herstellung einer Gipsfaserplatte 2 mit der erfindungsgemäßen Vorrichtung 1 beschrieben.

Es werden Gips 14, Fasern 15 und gegebenenfalls Zuschlagstoffe und/oder Zusatzstoffe und/oder Zusatzmittel 16 entsprechend einer herzustellenden Zusammensetzung in die Mischeinrichtung 4a gegeben. In der Mischeinrichtung 4a werden diese Rohstoffe zu der Mischung 13, insbesondere Trockenmischung 13, gemischt.

Bei dem Verfahren wird ein Gips 14 aus Naturgips, vorzugsweise Baugips oder Stuckgips, und/oder technischem Gips, vorzugsweise REA-Gips, und/oder gipsähnlichen Calciumsulfat-Modifikationen, vorzugsweise RC-Gips, verwendet. Insbesondere wird REA-Gips verwendet. Vorzugsweise wird Gips mit einer Korngröße von 1 µm bis 1 mm, vorzugsweise von 10 bis 200 µm, verwendet.

Als Fasern 15 werden zellulosehaltige Fasern, vorzugsweise recycelte Papierfasern, und/oder künstliche Mineralfasern, vorzugsweise Glasfasern, und/oder Steinwollfasern verwendet. Insbesondere werden Recycelte Papierfasern verwendet. Vorzugsweise werden Fasern 15 mit einer durchschnittlichen Faserlänge von 63 µm bis 2 mm verwendet.

Es können zudem übliche Zuschlagstoffe, Zusatzstoffe und/oder Zusatzmittel verwendet werden.

Vorzugsweise wird in der Mischeinrichtung 4a eine Mischung 13 mit folgender Zusammensetzung hergestellt:

| **Rohstoff** | **Anteil [Gew.-%]** |
|---|---|
| Gips | 75 bis 85 |
| Fasern | 5 bis 20 |
| Zuschlagstoff | 0 bis 10 |
| Zusatzstoff | 0 bis 2 |

Die Vorschubgeschwindigkeit V_{A} des Siebbands 3a der Fördereinrichtung 3 in Vorschubrichtung A wird vorzugsweise auf 5 bis 500 mm/s (abhängig von der Dicke der Mischung 13) eingestellt.

Die Mischung 13 wird mittels der Zuführeinrichtung 4b auf das Siebband 3a aufgebracht. Vorzugsweise wird die Mischung 13 mit einer Dicke bzw. Mischungshöhe von 20 bis 350 mm auf das Siebband 3a aufgestreut.

Die Mischung 13 wird zum Vorverdichten durch die der Mischeinrichtung 4a zugewandte Durchtrittsöffnung 30 der Sprühkammer 26 in die Vorverdichtungseinrichtung 5 hineingefördert.

In der Vorverdichtungseinrichtung 5 wird mit den Mitteln 22 die freie Oberseite 13a der Mischung 13 gleichmäßig mit dem Wassernebel 23 besprüht. Der Wassernebel 23 wird dabei vorzugsweise so eingestellt, dass die Mischung 13 mit feinen Wassertropfen mit einer durchschnittlichen Tropfengröße von 0,1 bis 60 µm, vorzugsweise 15 µm, besprüht wird. Insbesondere werden mit den Nebeldüsen 27 die aus Gas, z.B. Stickstoff, oder Luft und Wasserteilchen bestehenden, den Wassernebel 23 bildenden Aerosolkegel 31 hergestellt. Vorzugsweise werden die Aerosolkegel 31 dabei mit einem Luftdruck von 2 bis 4 bar, vorzugsweise 3 bar, und einem Flüssigkeitsdruck von 1 bis 3 bar, vorzugsweise 2 bar, und einem Strahlwinkel von 40 bis 80 °, vorzugsweise 60 °, hergestellt. In Abhängigkeit von der Mischungshöhe wird die Mischung 13 mit einer Wassermenge von 1 bis 10 l/h besprüht. Zur Herstellung einer Plattendicke von 30 mm wird die Mischung beispielsweise mit einer Wassermenge bzw. Wassernebelmenge von 7 l/h besprüht.

Vorzugsweise wird mit den Mitteln 22 zum Besprühen in der Mischung 13 ein Wasser/Feststoffwert w/f von 0,05 bis 0,25, vorzugsweise von 0,1, hergestellt.

In der Vorverdichtungseinrichtung 5 wird des Weiteren, insbesondere gleichzeitig mit dem Besprühen der Mischung 13 mit dem Wassernebel 23, an der Unterseite 13b der Mischung 13 mit den Mitteln 24 ein Unterdruck angelegt. Mit dem Unterdruck wird der Wassernebel 23 bzw. die im Wassernebel 23 enthaltenen Wasserteilchen in die Mischung 13 hineingesaugt, wodurch die Mischung 13 verdichtet und wasseraufnahmefähig gemacht wird. Vorzugsweise wird zum Vorverdichten ein Unterdruck von 5 bis 20 mbar, vorzugsweise von 10 bis 15 mbar, bevorzugt von 10 mbar, an die Mischung 13 angelegt. Insbesondere wird der Unterdruck fördermittelunterseitig angelegt, so dass der Unterdruck durch das Siebband 3a hindurch auf die Mischung 13 wirkt.

Nach dem Vorverdichten wird die Mischung 13 der Befeuchtungseinrichtung 6 zugeführt bzw. in die Befeuchtungseinrichtung 6 gefördert. In der Befeuchtungseinrichtung 6 wird die Mischung 13, insbesondere die Oberseite 13a der Mischung, mittels dem Wasservorhang 32 mit dem zum Abbinden der Gipsfasermischung notwendigen Abbindewasser befeuchtet bzw. gewässert. Vorzugsweise wird dabei ein Wasser/Feststoffwert w/f von 0,4 bis 0,6, vorzugsweise von 0,5, hergestellt.

Nach dem Befeuchten wird die Mischung 13 in die Nachverdichtungseinrichtung 7 gefördert bzw. die Mischung 13 passiert die Nachverdichtungseinrichtung 7. Mit der Nachverdichtungseinrichtung 7 wird an der Unterseite 13b der Mischung 13 ein Unterdruck angelegt. Mit dem Unterdruck wird das Abbindewasser in die Mischung 13 hineingesaugt, wobei die Mischung 13 weiter verdichtet bzw. nachverdichtet wird. Vorzugsweise wird zum Nachverdichten ein Unterdruck von 10 bis 25 mbar, vorzugsweise von 15 bis 20 mbar, bevorzugt von 20 mbar, an die Mischung 13 angelegt. Insbesondere wird der Unterdruck an der Unterseite des Siebbands 3a angelegt, so dass die Mischung 13 durch das Siebband 3a hindurch mit dem Unterdruck beaufschlagt wird. Insbesondere wird der Unterdruck so angelegt, dass die zur Erzeugung des Unterdrucks abgesaugte Luftmenge sektionsweise entlang der Siebbandunterseite in Vorschubrichtung A gesehen gesteigert wird.

Es liegt aber auch im Rahmen der Erfindung, dass das Befeuchten und Nachverdichten gleichzeitig erfolgt, insbesondere, dass zum Befeuchten und Nachverdichten eine analog zur Vorverdichtungseinrichtung ausgebildete Einrichtung verwendet wird.

Die nachverdichtete Mischung 13 wird zur Presseinrichtung 8 gefördert und mit den Mitteln zum Pressen zu einem Gipsfaserplattenstrang mit einer Dicke entsprechend der herzustellenden Gipsfaserplatte 2 gepresst. Vorzugsweise wird zum Pressen der Mischung 13 ein Druck von 100 bis 350 bar, insbesondere 300 bar angelegt.

Der Gipsfaserplattenstrang wird zur Schneideinrichtung 9 gefördert und mit den Mitteln zum Zerteilen in einzelne Gipsfaserplatten 2 vereinzelt.

Die vereinzelten Gipsfaserplatten 2 werden in die Trocknungseinrichtung 10 gefördert und mit den Mitteln zum Trocknen getrocknet. Vorzugsweise werden die Gipsfaserplatten 2 bei einer Temperatur von 80 bis 260 °C für 40 bis 100 Minuten getrocknet.

Gegebenenfalls werden die Gipsfaserplatten 2 in der Bearbeitungseinrichtung 11 profiliert und/oder nachbearbeitet. Beispielsweise können die Gipsfaserplatten 2 mit scharfkantigen oder profilierten Kanten versehen werden oder es kann eine Kante mit einer zum Plattenrand hin verlaufenden Abflachung hergestellt werden.

Nach dem Trocknen und Nachbearbeiten werden die Gipsfaserplatten 2 in der Beschichtungseinrichtung 12 gegebenenfalls mit einem Beschichtungsmittel, z.B. Hydrophobiermittel oder Mittel zur Staubbindung, beschichtet.

In vorteilhafter Weise werden wie vorstehend beschrieben Gipsfaserplatten 2 mit folgenden Abmessungen und Werkstoffeigenschaften hergestellt:
Dicke 6 bis 50 mm, vorzugsweise 10 bis 25 mm, bevorzugt 10 bis 18 mm,
Rohdichte nach DIN EN 15283-2 von 1000 bis 1500 kg/m³, vorzugsweise von 1200 kg/m³,
Biegefestigkeit nach DIN EN 15283-2 von 4 bis 15 N/mm², vorzugsweise von 7 N/mm².

Insbesondere können auch einteilige bzw. einstückige Gipsfaserplatten 2 mit einer Plattendicke > 25 mm zuverlässig hergestellt werden.

## Patentansprüche

1. Verfahren zur Herstellung einer Gipsfaserplatte (2) mit folgenden Verfahrensschritten:
- Erzeugen einer Mischung (13) aus calciniertem Gips (14) und Fasern (15),
- Aufbringen der Mischung (13) auf ein sich mit einer Vorschubgeschwindigkeit (V_{A}) kontinuierlich in eine Vorschubrichtung (A) bewegendes, gas- und/oder luft- und/oder flüssigkeitspermeables Fördermittel (3a),
- Vorverdichten der Mischung (13),
- Durchfeuchten der Mischung (13) mit Abbindewasser,
- Nachverdichten der Mischung (13),
- Pressen der Mischung (13) zu einem Gipsfaserplattenstrang,
- Ablängen des Gipsfaserplattenstrangs in einzelne Gipsfaserplatten (2),
- Trocknen der Gipsfaserplatten (2),
- Gegebenenfalls Nachbearbeiten und/oder Beschichten der getrockneten Gipsfaserplatten (2),
**dadurch gekennzeichnet, dass**
zum Vorverdichten die Mischung (13) mit einem Wassernebel (23) in Form eines Aerosols besprüht und mit einem Unterdruck beaufschlagt wird, wobei der Wassernebel (23) derart in die Mischung (13) hineingesaugt wird, dass die Mischung (13) über ihren gesamten Querschnitt gleichmäßig befeuchtet wird.

2. Verfahren nach Anspruch 1,
**dadurch gekennzeichnet, dass**
die Mischung mit folgender Zusammensetzung hergestellt wird:
| **Rohstoff** | **Anteil [Gew.-%]** |
|---|---|
| Gips | 75 bis 85 |
| Fasern | 5 bis 20 |
| Zuschlagstoff | 0 bis 10 |
| Zusatzstoff | 0 bis 2 |

3. Verfahren nach einem der vorhergehenden Ansprüche,
**dadurch gekennzeichnet, dass**
die Vorschubgeschwindigkeit (V_{A}) des Fördermittels (3a) auf 50 bis 500 mm/s eingestellt wird.

4. Verfahren nach einem der vorhergehenden Ansprüche,
**dadurch gekennzeichnet, dass**
zum Vorverdichten eine erste Oberfläche der Mischung (13), vorzugsweise deren fördermittelabgewandte Oberseite (13a), mit dem Wassernebel (23) besprüht wird, und, insbesondere gleichzeitig, an einer dieser gegenüberliegenden zweiten Oberfläche der Mischung (13), vorzugsweise an deren fördermittelzugewandter Unterseite (13b), der Unterdruck angelegt wird.

5. Verfahren nach einem der vorhergehenden Ansprüche,
**dadurch gekennzeichnet, dass**
zum Vorverdichten mit dem Wassernebel (23) in der Mischung (13) ein Wasser/Feststoffwert w/f von 0,05 bis 0,25, vorzugsweise von 0,1, hergestellt wird, und/oder
zum Vorverdichten der Wassernebel (23) so eingestellt wird, dass feine Wassertropfen mit einer durchschnittlichen Tropfengröße von 0,1 bis 60 µm, vorzugsweise 15 µm, erzeugt werden und die Mischung (13) mit einer Wassermenge von 1 bis 10 l/h besprüht wird, und/oder
zum Erzeugen des Wassernebels (23) 1 bis 35, vorzugsweise 14 bis 28, Nebeldüsen, insbesondere Pneumatik-Zerstäuberdüsen, verwendet werden, die jeweils mit einem Luftdruck von 2 bis 4 bar, vorzugsweise 3 bar, und einem Flüssigkeitsdruck von 1 bis 3 bar, vorzugsweise 2 bar, und einem Strahlwinkel von 40 bis 80 °, vorzugsweise 60 ° betrieben werden.

6. Verfahren nach einem der vorhergehenden Ansprüche,
**dadurch gekennzeichnet, dass**
zum Vorverdichten ein Unterdruck von 5 bis 20 mbar, vorzugsweise von 10 bis 15 mbar, bevorzugt von 10 mbar, an die Mischung (13) angelegt wird, und/oder
zum Vorverdichten der Unterdruck fördermittelunterseitig angelegt wird, so dass der Unterdruck durch das Fördermittel (3a) hindurch auf die Mischung (13) wirkt.

7. Verfahren nach einem der vorhergehenden Ansprüche,
**dadurch gekennzeichnet, dass**
auf eine erste Oberfläche der Mischung (13), vorzugsweise deren fördermittelabgewandte Oberseite (13a), das Abbindewasser zum Durchfeuchten aufgebracht wird, und, insbesondere danach, an einer dieser gegenüberliegenden zweiten Oberfläche der Mischung (13), vorzugsweise an deren fördermittelzugewandter Unterseite (13b), der Unterdruck zum Nachverdichten angelegt wird.

8. Verfahren nach einem der vorhergehenden Ansprüche,
**dadurch gekennzeichnet, dass**
zum Durchfeuchten mit dem Abbindewasser in der Mischung (13) ein Wasser/Feststoffwert w/f von 0,4 bis 0,6 hergestellt wird.

9. Verfahren nach einem der vorhergehenden Ansprüche,
**dadurch gekennzeichnet, dass**
zum Nachverdichten die Mischung (13) mit einem Unterdruck beaufschlagt wird, wobei insbesondere ein Unterdruck von 10 bis 25 mbar, vorzugsweise von 15 bis 20 mbar, bevorzugt von 20 mbar, erzeugt wird, wobei besonders bevorzugt die zur Erzeugung des Unterdrucks abgesaugte Luftmenge in Vorschubrichtung (A) sektionsweise gesteigert wird.

10. Verfahren nach einem der vorhergehenden Ansprüche,
**dadurch gekennzeichnet, dass**
zum Pressen der Mischung (13) ein Druck von 100 bis 350 bar angelegt wird.

11. Verfahren nach einem der vorhergehenden Ansprüche,
**dadurch gekennzeichnet, dass**
Gipsfaserplatten (2) mit einer Dicke von 6 bis 50 mm, vorzugsweise von 10 bis 18 mm oder von 25 bis 50 mm, bevorzugt von 25 bis 40 mm, besonders bevorzugt von 30 mm, hergestellt werden.

12. Verfahren nach einem der vorhergehenden Ansprüche,
**dadurch gekennzeichnet, dass**
zum Durchfeuchten mit dem Abbindewasser die Mischung (13) mittels eines Wasservorhangs (32) befeuchtet wird.

13. Vorrichtung (1) zur Herstellung einer Gipsfaserplatte (2), insbesondere zur Durchführung eines Verfahrens nach einem der vorhergehenden Ansprüche, aufweisend
- eine Fördereinrichtung mit einem in eine Vorschubrichtung (A) mit einer Vorschubgeschwindigkeit (V_{A}) antreibbaren Fördermittel (3a) zum Fördern von Rohstoffen, wobei das Fördermittel (3a) derart ausgebildet ist, dass es von Gasen und/oder Luft und/oder Wasser durchströmbar ist,
- eine Rohstoffapplikationseinrichtung (4) mit einer Zuführeinrichtung (4b) zum Aufbringen einer Gips (14) und Fasern (15) aufweisenden Mischung (13) auf das Fördermittel (3a),
- eine der Zuführeinrichtung (4b) in Vorschubrichtung (A) nachgeordnete Vorverdichtungseinrichtung (5),
- eine der Vorverdichtungseinrichtung (5) in Vorschubrichtung (A) nachgeordnete Befeuchtungseinrichtung (6) und Nachverdichtungseinrichtung (7),
- eine der Nachverdichtungseinrichtung (7) in Vorschubrichtung (A) nachgeordnete Presseinrichtung (8),
- eine der Presseinrichtung (8) in Vorschubrichtung (A) nachgeordnete Schneideinrichtung (9),
**dadurch gekennzeichnet, dass**
die Vorverdichtungseinrichtung (5) Mittel zum Besprühen (22) der Mischung (13) mit einem Wassernebel (23) in Form eines Aerosols sowie Mittel (24) zum, vorzugsweise gleichzeitigen, Beaufschlagen der Mischung (13) mit einem Unterdruck aufweist, wobei der Wassernebel (23) derart in die Mischung (13) hineinsaugbar ist, dass die Mischung (13) über ihren gesamten Querschnitt gleichmäßig befeuchtbar ist.

14. Vorrichtung nach Anspruch 13,
**dadurch gekennzeichnet, dass**
einander nachgeordnet eine Trocknungseinrichtung (10), eine Bearbeitungseinrichtung (11) und/oder eine Beschichtungseinrichtung (12) vorgesehen sind, die der Schneideinrichtung (9) in Vorschubrichtung (A) nachgeordnet sind.

15. Vorrichtung nach Anspruch 13 oder 14,
**dadurch gekennzeichnet, dass**
die Rohstoffapplikationseinrichtung (4) eine Mischeinrichtung (4a) zum Herstellen der Mischung (13) aufweist, wobei die Mischung (13) von der Mischeinrichtung (4a) der Zuführeinrichtung (4b) zuführbar ist.

16. Vorrichtung nach einem der Ansprüche 13 bis 15,
**dadurch gekennzeichnet, dass**
die Mittel (22, 24) ausgebildet sind, um eine erste Oberfläche der Mischung (13), vorzugsweise deren fördermittelabgewandte Oberseite (13a), mit dem Wassernebel (23) zu besprühen, und an einer dieser gegenüberliegenden zweiten Oberfläche der Mischung (13), vorzugsweise an deren fördermittelzugewandter Unterseite (13b), den Unterdruck anzulegen.

17. Vorrichtung nach einem der Ansprüche 13 bis 16,
**dadurch gekennzeichnet, dass**
die Mittel zum Besprühen (22) ausgebildet sind, um feine Wassertropfen mit einer durchschnittlichen Tropfengröße von 0,1 bis 60 µm, vorzugsweise 15 µm, zu erzeugen, und um die Mischung (13) mit einer Wassermenge von 1 bis 10 l/h zu besprühen, und/oder
die Mittel zum Besprühen (22) 1 bis 35, vorzugsweise 14 bis 28, Nebeldüsen, insbesondere Pneumatik-Zerstäuberdüsen, aufweisen, die jeweils mit einem Luftdruck von 2 bis 4 bar, vorzugsweise 3 bar, und einem Flüssigkeitsdruck von 1 bis 3 bar, vorzugsweise 2 bar, und einem Strahlwinkel von 40 bis 80 °, vorzugsweise 60 °, betreibbar sind, und/oder
die Mittel (24) ausgebildet sind, um die Mischung (13) mit einem Unterdruck von 5 bis 20 mbar, vorzugsweise von 10 bis 15 mbar, bevorzugt von 10 mbar, zu beaufschlagen, wobei vorzugsweise der Unterdruck an einer Unterseite der Auflagefläche des Fördermittels (3a) anlegbar ist, so dass die Mischung (13) durch das Fördermittel (3a) hindurch mit dem Unterdruck beaufschlagbar ist.

18. Vorrichtung nach einem der Ansprüche 13 bis 17,
**dadurch gekennzeichnet, dass**
die Nachverdichtungseinrichtung (7) Mittel zum Erzeugen eines Unterdrucks aufweist und ausgebildet ist, um die Mischung (13) mit einem Unterdruck von 10 bis 25 mbar, vorzugsweise von 15 bis 20 mbar, bevorzugt von 20 mbar, zu beaufschlagen, wobei vorzugsweise die Nachverdichtungseinrichtung (7) der Befeuchtungseinrichtung (6) nachgeordnet ist und ausgebildet ist, um den Unterdruck an einer Unterseite des Fördermittels (3a) anzulegen, so dass die Mischung (13) durch das Fördermittel (3a) hindurch mit dem Unterdruck beaufschlagbar ist, wobei besonders bevorzugt der Unterdruck langsam steigerbar anlegbar ist.

19. Vorrichtung nach einem der Ansprüche 13 bis 18,
**dadurch gekennzeichnet, dass**
die Befeuchtungseinrichtung (6) einen Wasservorhang (32) zum Bewässern der Mischung (13) mit dem zum Abbinden der Gipsfasermischung notwendigen Abbindewasser sowie einen mit dem Wasservorhang (32) verbundenen Wasservorratsbehälter (33) zum Zuführen des Abbindewassers aufweist.

## Claims

1. A method for production of a gypsum fiberboard panel (2), having the following method steps:
- producing a mixture (13) of calcined gypsum (14) and fibers (15),
- applying the mixture (13) onto a gas-permeable and/or air-permeable and/or liquid-permeable conveying means (3a) that continuously moves in an advancing direction (A) at an advancing speed (V_{A}),
- pre-compacting the mixture (13)
- soaking the mixture (13) with setting water,
- post-compacting the mixture (13),
- pressing the mixture (13) to form a gypsum fiberboard panel strand,
- cutting the gypsum fiberboard panel strand into individual gypsum fiberboard panels (2),
- drying the gypsum fiberboard panels (2),
- if necessary, finishing and/or coating the dried gypsum fiberboard panels (2),
**characterized in that** for pre-compacting, the mixture (13) is sprayed with a water mist (23) in the form of an aerosol and is subjected to negative pressure, wherein the water mist (23) is drawn into the mixture (13) in such a manner that the mixture (13) is uniformly wetted over its entire cross-section.

2. The method according to claim 1,
**characterized in that**
the mixture is produced with the following composition:
| **Raw material** | **Proportion [weight-%]** |
|---|---|
| Gypsum | 75 to 85 |
| Fibers | 5 to 20 |
| Aggregate | 0 to 10 |
| Additive | 0 to 2 |

3. The method according to one of the preceding claims,
**characterized in that**
the advancing speed (V_{A}) of the conveying means (3a) is set to 50 to 500 mm/s.

4. The method according to one of the preceding claims,
**characterized in that**
for pre-compacting, a first surface of the mixture (13), preferably its top side (13a) facing away from the conveying means, is sprayed with the water mist (23), and, in particular at the same time, the negative pressure is applied on a second surface of the mixture (13), which lies opposite thereto, preferably on its underside facing the conveying means.

5. The method according to one of the preceding claims,
**characterized in that**
for pre-compacting with the water mist (23), a water/solid value w/s of 0,05 to 0,25, preferably of 0,1, is produced in the mixture (13) and/or
for pre-compacting, the water mist (23) is set in such a manner that fine water droplets having an average droplet size of 0,1 to 60 µm, preferably 15 µm are produced, and the mixture (13) is sprayed with a water amount of 1 to 10 l/h, and/or
for producing the water mist (23), 1 to 35, preferably 14 to 28 mist nozzles, in particular pneumatic atomizer nozzles, are used, which are each operated at an air pressure of 2 to 4 bar, preferably 3 bar, and a liquid pressure of 1 to 3 bar, preferably 2 bar, and a jet angle of 40 to 80°, preferably 60°.

6. The method according to one of the preceding claims,
**characterized in that**
for pre-compacting, a negative pressure of 5 to 20 mbar, preferably of 10 to 15 mbar, preferentially of 10 mbar is applied to the mixture (13), and/or
for pre-compacting, the negative pressure is applied on the conveying means underside so that the negative pressure acts on the mixture (13) through the conveying means (3a).

7. The method according to one of the preceding claims,
**characterized in that**
the setting water for soaking is applied to a first surface of the mixture (13), preferably its top side (13a) facing away from the conveying means, and, in particular afterwards, the negative pressure for post-compacting is applied on a second surface of the mixture (13), which lies opposite thereto, preferably on its underside (13b) facing the conveying means.

8. The method according to one of the preceding claims,
**characterized in that**
for soaking with the setting water, a water/solid value w/s of 0,4 to 0,6 is set in the mixture (13).

9. The method according to one of the preceding claims,
**characterized in that**
for post-compacting, the mixture (13) is subjected to negative pressure, wherein in particular, a negative pressure of 10 to 25 mbar, preferably of 15 to 20 mbar, preferentially of 20 mbar, is produced, wherein particularly preferably, the amount of air drawn off to generate the negative pressure is increased section by section in the advancing direction (A).

10. The method according to one of the preceding claims,
**characterized in that**
a pressure of 100 to 350 bar is applied for pressing the mixture (13).

11. The method according to one of the preceding claims,
**characterized in that**
gypsum fiberboard panels (2) having a thickness of 6 to 50 mm, preferably of 10 to 18 mm or of 25 to 50 mm, preferably of 25 to 40 mm, particularly preferably of 30 mm, are produced.

12. The method according to one of the preceding claims,
**characterized in that**
for soaking with the setting water, the mixture (13) is wetted by means of a water curtain (32).

13. An apparatus (1) for production of a gypsum fiberboard panel (2), in particular for carrying out the method according to one of the preceding claims, comprising
- a conveying device having a conveying means (3a) that can be driven in an advancing direction (A) at an advancing speed (V_{A}) for conveying raw materials, wherein the conveying means (3a) is configured in such a manner that it can have gases and/or air and/or water flowing through it,
- a raw material application device (4) having a feeding device (4b) for applying a mixture (13) comprising gypsum (14) and fibers (15) onto the conveying means (3a),
- a pre-compacting device (5) arranged downstream of the feeding device (4b) in the advancing direction (A),
- a wetting device (6) and a post-compacting device (7) arranged downstream of the pre-compacting device (5) in the advancing direction (A),
- a pressing device (8) arranged downstream of the post-compacting device (7) in the advancing direction (A), and
- a cutting device (9) arranged downstream of the pressing device (8) in the advancing direction (A),
**characterized in that**
the pre-compacting device (5) has means for spraying (22) the mixture (13) with a water mist (23) in the form of an aerosol as well as means (24) for, preferably simultaneously, subjecting the mixture (13) with a negative pressure, wherein the water mist (23) can be drawn into the mixture (13) in such a manner that the mixture (13) can be uniformly wetted over its entire cross-section.

14. The apparatus according to claim 13,
**characterized in that**
a drying device (10), a finishing device (11) and/or a coating device (12) are provided following each other and following the cutting device (9) in the advancing direction (A).

15. The apparatus according to claim 13 or 14,
**characterized in that**
the raw material application device (4) has a mixing device (4b) for producing the mixture (13), wherein the mixture (13) can be fed to the feeding device (4b) by the mixing device (4a).

16. The apparatus according to one of claims 13 to 15,
**characterized in that**
the means (22, 24) are configured so as to spray a first surface of the mixture (13), preferably its top side (13a) facing away from the conveying means (13), with the water mist (23), and to apply the negative pressure to a second surface of the mixture (13) lying opposite thereto, preferably to its underside (13b) facing the conveying means.

17. The apparatus according to one of claims 13 to 16,
**characterized in that**
the means for spraying (22) are configured so as to generate fine water droplets having an average droplet size of 0,1 to 60 µm, preferably 15 µm, and to spray the mixture (13) with a water amount of 1 to 10 l/h, and/or
the means for spraying (22) have 1 to 35, preferably 14 to 28 mist nozzles, in particular pneumatic atomizer nozzles, each of which can be operated at an air pressure of 2 to 4 bar, preferably 3 bar, and a liquid pressure of 1 to 3 bar, preferably 2 bar, and a jet angle of 40 to 80°, preferably 60°, and/or
the means (24) are configured so as to apply a negative pressure of 5 to 20 mbar, preferably of 10 to 15 mbar, preferentially of 10 mbar to the mixture (13), wherein preferably, the negative pressure can be applied on an underside of the contact surface of the conveying means (3a), so that the negative pressure can be applied to the mixture (13) through the conveying means (3a).

18. The apparatus according to one of claims 13 to 17,
**characterized in that**
the post-compacting device (7) has means for generating a negative pressure and is configured so as to apply a negative pressure of 10 to 25 mbar, preferably of 15 to 20 mbar, preferentially of 20 mbar, to the mixture (13), wherein preferably the post-compacting device (7) is arranged downstream of the wetting device (6) and is configured so as to apply the negative pressure at an underside of the conveying means (3a), so that the mixture (13) can be subjected with the negative pressure through the conveying means (3a), wherein particularly preferably, the negative pressure can be applied in a slowly increasing manner.

19. The apparatus according to one of claims 13 to 18,
**characterized in that**
the wetting device (6) comprises a water curtain (32) for wetting the mixture (13) with the setting water required for setting the gypsum fiber mixture as well as a water supply container (33) connected to the water curtain (32) for supplying the setting water.

## Revendications

1. Procédé de fabrication d'une plaque de plâtre-fibre (2) avec les étapes de procédé suivantes :
- la production d'un mélange (13) de plâtre (14) calciné et de fibres (15),
- l'application du mélange (13) sur un moyen de transport (3a) perméable au gaz et/ou à l'air et /ou au liquide, se déplaçant en continu à une vitesse d'avance (V_{A}) dans un sens d'avance (A),
- le précompactage du mélange (13),
- l'imprégnation du mélange (13) avec de l'eau de prise,
- le postcompactage du mélange (13),
- le pressage du mélange (13) en un brin de plaque de plâtre-fibre,
- la découpe à longueur du brin de plaque plâtre-fibre en plaques de plâtre-fibre (2) individuelles,
- le séchage des plaques de plâtre-fibre (2),
- facultativement le retraitement et/ou le revêtement des plaques de plâtre-fibre (2) séchées,
**caractérisé en ce que**
pour le précompactage le mélange (13) est pulvérisé avec un brouillard d'eau (23) sous la forme d'un aérosol et est alimenté en une dépression, dans lequel le brouillard d'eau (23) est aspiré dans le mélange (13) de telle manière que le mélange (13) soit humidifié uniformément sur sa section transversale entière.

2. Procédé selon la revendication 1,
**caractérisé en ce que**
le mélange est fabriqué avec la composition suivante :
| **Matière première** | **Part [en % en poids]** |
|---|---|
| Plâtre | 75 à 85 |
| Fibres | 5 à 20 |
| Granulat | 0 à 10 |
| Additif | 0 à 2 |

3. Procédé selon l'une des revendications précédentes,
**caractérisé en ce que**
la vitesse d'avance (V_{A}) du moyen de transport (3a) est réglée à 50 à 500 mm/s.

4. Procédé selon l'une des revendications précédentes,
**caractérisé en ce que**
pour le précompactage une première surface du mélange (13), de préférence son côté supérieur (13a) éloigné du moyen de transport, est pulvérisée avec le brouillard d'eau (23), et, en particulier simultanément, la dépression est appliquée contre une seconde surface opposée à celle-ci du mélange (13), de préférence contre son côté inférieur (13b) tourné vers le moyen de transport.

5. Procédé selon l'une des revendications précédentes,
**caractérisé en ce que**
pour le précompactage avec le brouillard d'eau (23) dans le mélange (13) un rapport d'eau/de matière solide w/f de 0,05 à 0,25, de préférence de 0,1 est établi, et/ou
pour le précompactage le brouillard d'eau (23) est réglé de sorte que de fines gouttes d'eau soient générées avec une grandeur de goutte moyenne de 0,1 à 60 µm, de préférence de 15 µm et le mélange (13) soit pulvérisé avec une quantité d'eau de 1 à 10 l/h, et/ou
pour la génération du brouillard d'eau (23) 1 à 35, de préférence 14 à 28, buses de brouillard, en particulier des buses de pulvérisation pneumatiques, sont utilisées, lesquelles sont actionnées respectivement avec une pression d'air de 2 à 4 bars, de préférence de 3 bars, et une pression de liquide de 1 à 3 bars, de préférence de 2 bars, et un angle de jet de 40 à 80°, de préférence de 60°.

6. Procédé selon l'une des revendications précédentes,
**caractérisé en ce que**
pour le précompactage une dépression de 5 à 20 mbars, de préférence de 10 à 15 mbars, de préférence de 10 mbars, est appliquée contre le mélange (13), et/ou
pour le précompactage la dépression est appliquée côté inférieur du moyen de transport de sorte que la dépression agisse à travers le moyen de transport (3a) sur le mélange (13).

7. Procédé selon l'une des revendications précédentes,
**caractérisé en ce que**
l'eau de prise pour l'imprégnation est appliquée sur une première surface du mélange (13), de préférence son côté supérieur (13a) éloigné du moyen de transport, et, en particulier ensuite, la dépression est appliquée pour le post-compactage contre une seconde surface opposée à celle-ci du mélange (13), de préférence sur son côté inférieur (13b) tourné vers le moyen de transport.

8. Procédé selon l'une des revendications précédentes,
**caractérisé en ce que**
pour l'imprégnation avec l'eau de prise dans le mélange (13) un rapport d'eau/de matière solide w/f de 0,4 à 0,6 est établi.

9. Procédé selon l'une des revendications précédentes,
**caractérisé en ce que**
pour le postcompactage le mélange (13) est alimenté en une dépression, dans lequel en particulier une dépression de 10 à 25 mbars, de préférence de 15 à 20 mbars, de préférence de 20 mbars, est générée, dans lequel de manière particulièrement préférée la quantité d'air aspirée pour la génération de la dépression est augmentée par sections dans le sens d'avance (A).

10. Procédé selon l'une des revendications précédentes,
**caractérisé en ce que**
pour le pressage du mélange (13) une pression de 100 à 350 bars est appliquée.

11. Procédé selon l'une des revendications précédentes,
**caractérisé en ce que**
des plaques de plâtre-fibre (2) sont fabriquées avec une épaisseur de 6 à 50 mm, de préférence de 10 à 18 mm ou de 25 à 50 mm, de préférence de 25 à 40 mm, de manière particulièrement préférée de 30 mm.

12. Procédé selon l'une des revendications précédentes,
**caractérisé en ce que**
pour l'imprégnation avec l'eau de prise le mélange (13) est humidifié au moyen d'un rideau d'eau (32).

13. Dispositif (1) pour la fabrication d'une plaque de plâtre-fibre (2), en particulier pour la réalisation d'un procédé selon l'une des revendications précédentes, présentant
- un dispositif de transport avec un moyen de transport (3a) entraînable dans un sens d'avance (A) à une vitesse d'avance (V_{A}) pour le transport de matières premières, dans lequel le moyen de transport (3a) est réalisé de manière à pouvoir être traversé par des gaz et/ou de l'air et/ou de l'eau,
- un dispositif d'application de matière première (4) avec un dispositif de fourniture (4b) pour l'application d'un mélange (13) présentant du plâtre (14) et des fibres (15) sur le moyen de transport (3a),
- un dispositif de précompactage (5) agencé en aval du dispositif de fourniture (4b) dans le sens d'avance (A),
- un dispositif d'humification (6) et dispositif de postcompactage (7) agencés en aval du dispositif de précompactage (5) dans le sens d'avance (A),
- un dispositif de pressage (8) agencé en aval du dispositif de postcompactage (7) dans le sens d'avance (A),
- un dispositif de coupe (9) agencé en aval du dispositif de pressage (8) dans le sens d'avance (A),
**caractérisé en ce que**
le dispositif de précompactage (5) présente des moyens de pulvérisation (22) du mélange (13) avec un brouillard d'eau (23) sous la forme d'un aérosol ainsi que des moyens (24) pour l'alimentation, de préférence simultanée, du mélange (13) en une dépression, dans lequel le brouillard d'eau (23) peut être aspiré dans le mélange (13) de telle manière que le mélange (13) puisse être humidifié sur sa section transversale entière.

14. Dispositif selon la revendication 13,
**caractérisé en ce que**
un dispositif de séchage (10), un dispositif d'usinage (11) et/ou un dispositif de revêtement (12) sont prévus agencés les après les autres, lesquels sont agencés en aval du dispositif de coupe (9) dans le sens d'avance (A).

15. Dispositif selon la revendication 13 ou 14,
**caractérisé en ce que**
le dispositif d'application de matière première (4) présente un dispositif de mélange (4a) pour l'établissement du mélange (13), dans lequel le mélange (13) peut être fourni par le dispositif de mélange (4a) au dispositif de fourniture (4b).

16. Dispositif selon l'une des revendications 13 à 15,
**caractérisé en ce que**
les moyens (22, 24) sont réalisés afin de pulvériser une première surface du mélange (13), de préférence son côté supérieur (13a) éloigné du moyen de transport, avec le brouillard d'eau (23), et d'appliquer la dépression contre une seconde surface opposée à celle-ci du mélange (13), de préférence contre son côté inférieur (13b) tourné vers le moyen de transport.

17. Dispositif selon l'une des revendications 13 à 16,
**caractérisé en ce que**
les moyens pour la pulvérisation (22) sont réalisés afin de générer des gouttes d'eau fines avec une grandeur de goutte moyenne de 0,1 à 60 µm, de préférence de 15 µm, et afin de pulvériser le mélange (13) avec une quantité d'eau de 1 à 10 l/h, et/ou
les moyens pour la pulvérisation (22) présentent 1 à 35, de préférence 14 à 28 buses de brouillard, en particulier des buses de pulvérisation pneumatiques, qui peuvent être actionnées respectivement avec une pression d'air de 2 à 4 bars, de préférence de 3 bars, et une pression de liquide de 1 à 3 bars, de préférence de 2 bars, et un angle de jet de 40 à 80°, de préférence de 60°, et/ou
les moyens (24) sont réalisés afin d'alimenter le mélange (13) en une dépression de 5 à 20 mbars, de préférence de 10 à 15 mbars, de préférence de 10 mbars, dans lequel de préférence la dépression peut être appliquée contre un côté inférieur de la surface d'appui du moyen de transport (3a) de sorte que le mélange (13) puisse être alimenté à travers le moyen de transport (3a) en la dépression.

18. Dispositif selon l'une des revendications 13 à 17,
**caractérisé en ce que**
le dispositif de postcompactage (7) présente des moyens pour la génération d'une dépression et est réalisé afin d'alimenter le mélange (13) en une dépression de 10 à 25 mbars, de préférence de 15 à 20 mbars, de préférence de 20 mbars, dans lequel de préférence le dispositif de postcompactage (7) est agencé en aval du dispositif d'humidification (6) et est réalisé afin d'appliquer la dépression contre un côté inférieur du moyen de transport (3a) de sorte que le mélange (13) puisse être alimenté à travers le moyen de transport (3a) en la dépression, dans lequel de manière particulièrement préférée la dépression peut être appliquée en pouvant être augmentée lentement.

19. Dispositif selon l'une des revendications 13 à 18,
**caractérisé en ce que**
le dispositif d'humidification (6) présente un rideau d'eau (32) pour l'arrosage du mélange (13) avec l'eau de prise nécessaire à la prise du mélange de plâtre-fibre ainsi qu'un réservoir de stockage d'eau (33) relié au rideau d'eau (32) pour la fourniture de l'eau de prise.
